(19) Europäisches Patentamt / European Patent Office / Office européen des brevets

(11) **EP 2 586 584 B1**

(12) **EUROPÄISCHE PATENTSCHRIFT**

(45) Veröffentlichungstag und Bekanntmachung des Hinweises auf die Patenterteilung:
**27.04.2016 Patentblatt 2016/17**

(51) Int Cl.:
**B29B 7/48** (2006.01)  **B29C 47/40** (2006.01)
**B29C 47/64** (2006.01)

(21) Anmeldenummer: **13152241.9**

(22) Anmeldetag: **06.06.2009**

(54) **Schneckenelemente mit verbesserter Dispergierwirkung und geringem Energieeintrag**

Worm elements with an improved dispersing effect and low power input

Éléments de vis sans fin à effet dispersant amélioré et à apport d'énergie rèduit

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **20.06.2008 DE 102008029303**

(43) Veröffentlichungstag der Anmeldung:
**01.05.2013 Patentblatt 2013/18**

(62) Dokumentnummer(n) der früheren Anmeldung(en) nach Art. 76 EPÜ:
**09765548.4 / 2 303 531**

(73) Patentinhaber: **Covestro Deutschland AG**
**51373 Leverkusen (DE)**

(72) Erfinder:
• **Bierdel, Michael**
  **51373 Leverkusen (DE)**
• **König, Thomas**
  **51375 Leverkusen (DE)**
• **Liesenfelder, Ulrich**
  **51469 Bergisch Gladbach (DE)**

(74) Vertreter: **Levpat**
**c/o Covestro AG**
**Alfred-Nobel-Straße 10**
**40789 Monheim am Rhein (DE)**

(56) Entgegenhaltungen:
EP-A1- 0 771 629    EP-A1- 0 778 078
EP-A1- 0 931 640    EP-A1- 1 832 407
EP-A2- 0 160 124

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft Schneckenelemente für mehrwellige Schneckenmaschinen mit paarweise gleichsinnigen und paarweise exakt abschabenden Schneckenwellen, die Verwendung der Schneckenelemente in mehrwelligen Schneckenmaschinen sowie ein Verfahren zur Erzeugung der Schneckenelemente.

Gleichsinnig drehende Zwei- oder ggf. Mehrwellenmaschinen, deren Rotoren sich gegenseitig exakt abschaben, sind bereits seit langem bekannt (siehe z.B. DP 862 668). In der Polymerherstellung und -verarbeitung haben Schneckenmaschinen, die auf dem Prinzip exakt abschabender Profile beruhen, eine vielfältige Nutzung erfahren. Dies beruht vor allem darauf, dass Polymerschmelzen an Oberflächen anhaften und unter üblichen Verarbeitungstemperaturen mit der Zeit degradieren, was durch die selbstreinigende Wirkung der exakt abschabenden Schnecken unterbunden wird. Regeln zur Erzeugung exakt abschabender Schneckenprofile sind beispielsweise in [1] ([1] = Klemens Kohlgrüber: Der gleichläufige Doppelschneckenextruder, Hanser Verlag München 2007, S.96 ff) dargestellt. Hier wird auch beschrieben, dass ein vorgegebenes Schneckenprofil auf der 1. Welle eines Doppelschneckenextruders das Schneckenprofil auf der 2. Welle eines Doppelschneckenextruders bestimmt. Das Schneckenprofil auf der 1. Welle des Doppelschneckenextruders wird daher als das erzeugende Schneckenprofil bezeichnet. Das Schneckenprofil auf der 2. Welle des Doppelschneckenextruders folgt aus dem Schneckenprofil der 1. Welle des Doppelschneckenextruders und wird daher als das erzeugte Schneckenprofil bezeichnet. Bei einem Mehrwellenextruder werden das erzeugende Schneckenprofil und das erzeugte Schneckenprofil auf benachbarten Wellen immer abwechselnd eingesetzt.

Moderne Doppelschneckenextruder verfügen über ein Baukastensystem, bei dem verschiedene Schneckenelemente auf einer Kernwelle aufgezogen werden können. Hiermit kann der Fachmann den Doppelschneckenextruder an die jeweilige Verfahrensaufgabe anpassen.

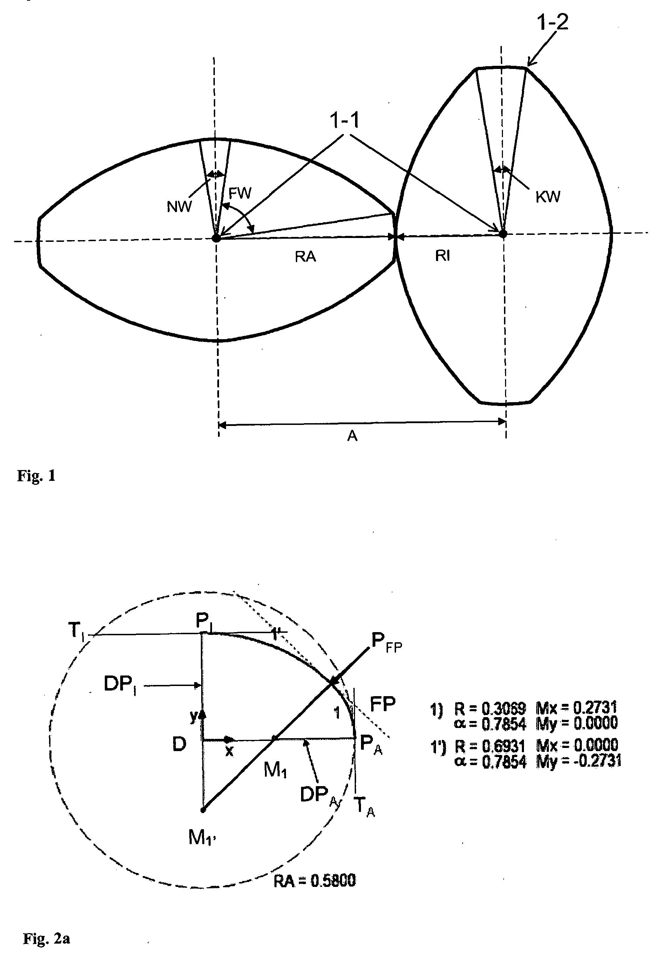

Nach dem Stand der Technik bekannte Schneckenelemente mit Ausnahme exzentrisch angeordneter Kreisscheiben sind dadurch gekennzeichnet, dass die Profilkurve im Querschnitt mindestens einen Knick aufweist (siehe z.B. Fig. 1), der am Übergang zwischen dem Schneckenkamm und den Gewindeflanken auftritt. Der Kamm besteht aus einem Kreisbogen mit Radius = Außendurchmesser des Profils und dem Drehpunkt des Profils als Mittelpunkt. Der Knick am Übergang zur Flanke des Profils bildet auf dem Schneckenelement eine Kante.

Eine der wesentlichen Aufgaben, die auf Mehrwellenmaschinen durchgeführt werden, ist das Dispergieren von flüssigen Phasen oder Schmelzen, die nicht homogen ineinander mischbar sind oder das Dispergieren von Feststoffen in Polymerschmelzen. Aus der technischen Literatur ist bekannt (siehe z.B. Chang Dae Han: Multiphase Flow in Polymer Processing, Academic Press, New York 1981), dass eine Kombination aus Scherströmung und Dehnströmung für schwierige Dispergieraufgaben optimal ist.

Eine solche Strömungsform liegt in einem Schneckenkanal vor, wo die Masse einerseits durch die Rotation der Wellen geschert und andererseits durch die Konvergenz des Schneckenkanals zum Kamm hin gleichzeitig gedehnt wird. Im Bereich des Schneckenkammes liegt allerdings eine reine Scherströmung vor, die bei schwierigen Dispergieraufgaben kaum zur Dispergierung beitragen wird. Andererseits wird im Spalt zwischen dem Schneckenkamm und dem Gehäuse beziehungsweise der Nachbarwelle der größte Teil der eingetragenen Energie dissipiert. Deshalb trägt dieser Bereich maßgeblich zur Erhitzung der Polymermasse und damit potentiell zur thermischen Schädigung bei, ohne einen Beitrag zur Verfahrensaufgabe der Dispergierung zu leisten.

Eine Ausnahmestellung haben exzentrisch angeordnete Kreisscheiben, die bekanntermaßen exakt abschabend angeordnet werden können. Sie weisen keinen Kammbereich mit reiner Scherströmung auf. Sie sind für ihre exzellente Dispergierwirkung bekannt, weisen aber ebenfalls eine hohe Energieeinleitung auf, weil sie über einen großen Umfangsbereich einen sehr engen Spalt erzeugen. Ferner sind sie auf eine Gangzahl Z=1 beschränkt.

EP0160124A2 offenbart Schneckenelemente gemäß dem Oberbegriff des Anspruchs 1.

Es stellt sich daher ausgehend vom Stand der Technik die Aufgabe, Schneckenelemente für mehrwellige Schneckenmaschinen bereitzustellen, die bei möglichst geringer Energieeinleitung eine gegenüber dem Stand der Technik verbesserte Dispergierwirkung aufweisen.

Überraschend wurde gefunden, dass diese Aufgabe durch Schneckenelemente gelöst wird, deren Profil über den gesamten Querschnitt durch eine stetig differenzierbare Profilkurve darstellbar ist. Gegenstand der Erfindung sind daher Schneckenelemente für mehrwellige Schneckenmaschinen mit paarweise gleichsinnigen und paarweise exakt abschabenden Schneckenwellen mit zwei oder mehr Schneckengängen, dadurch gekennzeichnet, dass das erzeugende und das erzeugte Schneckenprofil über den gesamten Querschnitt jeweils durch eine stetig differenzierbare Profilkurve darstellbar sind.

Dabei ist die Erfindung nicht auf Schneckenelemente aus der heutzutage üblichen Modulbauweise einer Schnecke aus Schneckenelementen und Kernwellen beschränkt, sondern auch auf Schnecken in Massivbauweise anwendbar. Daher sind unter dem Begriff Schneckenelemente auch Schnecken in Massivbauweise zu verstehen.

Die Querschnittprofile - im Folgenden auch kurz Profile oder auch Schneckenprofile genannt - erfindungsgemäßer Schneckenelemente lassen sich durch eine Anordnung von Kreisbögen eindeutig beschreiben. Das Schneckenprofil erzeugender und erzeugter erfindungsgemäßer Schneckenelemente setzt sich in seiner Gesamtheit aus n Kreisbögen zusammen, wobei n größer oder gleich vier ist. Jeder der n Kreisbögen besitzt einen Anfangs- und einen Endpunkt. Die n Kreisbögen gehen an ihren Anfangs- und Endpunkten tangential ineinander über, so dass sie erfindungsgemäß eine stetig differenzierbare Profilkurve bilden.

Die Position eines jeden Kreisbogens j (j=1 bis n) ist durch die Angabe von zwei verschiedenen Punkten eindeutig festlegbar. Zweckmäßigerweise wird die Position eines Kreisbogens durch Angabe des Mittelpunktes und des Anfangs- oder Endpunktes festgelegt. Die Größe eines einzelnen Kreisbogens j ist durch den Radius $r_j$ und den Winkel $\alpha_j$ um den Mittelpunkt zwischen Anfangs- und Endpunkt festgelegt, wobei der Radius $r_j$ größer als 0 und kleiner als der Achsabstand a zwischen den Wellen ist und der Winkel $\alpha_j$ im Bogenmaß größer oder gleich 0 und kleiner oder gleich 2n ist, wobei $\pi$ die Kreiszahl ist.
Schneckenelemente können dabei die Merkmale aufweisen, dass

- das erzeugende Schneckenprofil und das erzeugte Schneckenprofil in einer Ebene liegen,
- die Drehachse des erzeugenden Schneckenprofils und die Drehachse des erzeugten Schneckenprofils in einem Abstand a (Achsabstand) jeweils senkrecht auf der besagten Ebene der Schneckenprofile stehen, wobei der Schnittpunkt der Drehachse des erzeugenden Schneckenprofils mit der besagten Ebene als Drehpunkt des erzeugenden Schneckenprofils und der Schnittpunkt der Drehachse des erzeugten Schneckenprofils mit der besagten Ebene als Drehpunkt des erzeugten Schneckenprofils bezeichnet wird,
- die Anzahl der Kreisbögen des gesamten erzeugenden Schneckenprofils n größer oder gleich vier (n≥4) ist,
- der Außenradius ra des erzeugenden Schneckenprofils größer als Null (ra>0) und kleiner als der Achsabstand (ra<a) ist,
- der Kernradius ri des erzeugenden Schneckenprofils größer als Null (ri>0) und kleiner oder gleich ra (ri≤ra) ist,
- alle Kreisbögen des erzeugenden Schneckenprofils tangential ineinander übergehen,
- die Kreisbögen ein geschlossenes Schneckenprofil bilden, d.h. die Summe der Winkel $\alpha_j$ aller Kreisbögen j gleich $2\pi$ ist, wobei $\pi$ die Kreiszahl ($\pi \approx 3,14159$) ist,
- die Kreisbögen ein konvexes Schneckenprofil bilden,
- jeder der Kreisbögen des erzeugenden Schneckenprofils innerhalb oder auf den Grenzen eines Kreisrings mit dem Außenradius ra und dem Kernradius ri liegt, dessen Mittelpunkt auf dem Drehpunkt des erzeugenden Schneckenprofils liegt,

- mindestens einer der Kreisbögen des erzeugenden Schneckenprofils den Außenradius ra des erzeugenden Schneckenprofils in einem Punkt $P_A$ berührt,
- mindestens einer der Kreisbögen des erzeugenden Schneckenprofils den Kernradius ri des erzeugenden Schneckenprofils in einem Punkt $P_1$ berührt,
- die Anzahl der Kreisbögen n' des erzeugten Schneckenprofils gleich der Anzahl der Kreisbögen n des erzeugenden Schneckenprofils ist,
- der Außenradius ra' des erzeugten Schneckenprofils gleich der Differenz aus Achsabstand und Kernradius ri des erzeugenden Schneckenprofils ist (ra' = a-ri),
- der Kernradius ri' des erzeugten Schneckenprofils gleich der Differenz aus Achsabstand und Außenradius ra des erzeugenden Schneckenprofils ist (ri' = a-ra),
- der Winkel $\alpha_j$' des j'-ten Kreisbogens des erzeugten Schneckenprofils gleich dem Winkel $\alpha_j$ des j-ten Kreisbogens des erzeugenden Schneckenprofils ist, wobei j und j' ganze Zahlen sind, die gemeinsam alle Werte im Bereich von 1 bis zur Anzahl der Kreisbögen n beziehungsweise n' durchlaufen,
- die Summe von Radius $r_j$' des j'-ten Kreisbogens des erzeugten Schneckenprofils und Radius $r_j$ des j-ten Kreisbogens des erzeugenden Schneckenprofils gleich dem Achsabstand a ist, wobei j und j' ganze Zahlen sind, die gemeinsam alle Werte im Bereich 1 bis zur Anzahl der Kreisbögen n beziehungsweise n' durchlaufen,
- der Mittelpunkt des j'-ten Kreisbogens des erzeugten Schneckenprofils einen Abstand von dem Mittelpunkt des j-ten Kreisbogens des erzeugenden Schneckenprofils besitzt, der gleich dem Achsabstand a ist, und der Mittelpunkt des j'-ten Kreisbogens des erzeugten Schneckenprofils einen Abstand von dem Drehpunkt des erzeugten Schneckenprofils besitzt, der gleich dem Abstand des Mittelpunkts des j-ten Kreisbogens des erzeugenden Schneckenprofils von dem Drehpunkt des erzeugenden Schneckenprofils ist, und die Verbindungslinie zwischen dem Mittelpunkt des j'-ten Kreisbogens des erzeugten Schneckenprofils und dem Mittelpunkt des j-ten Kreisbogens des erzeugenden Schneckenprofils eine Parallele zu einer Verbindungslinie zwischen dem Drehpunkt des erzeugten Schneckenprofils und dem Drehpunkt des erzeugenden Schneckenprofils ist, wobei j und j' ganze Zahlen sind, die gemeinsam alle Werte im Bereich 1 bis zur Anzahl der Kreisbögen n beziehungsweise n' durchlaufen,
- ein Anfangspunkt des j'-ten Kreisbogens des erzeugten Schneckenprofils in einer Richtung bezogen auf den Mittelpunkt des j'-ten Kreisbogens des erzeugten Schneckenprofils liegt, die entgegengesetzt derjenigen Richtung ist, die ein Anfangspunkt des j-ten Kreisbogens des erzeugenden Schneckenprofils bezogen auf den Mittelpunkt des j-ten Kreisbogens des erzeugenden Schneckenprofils besitzt, wobei j und j' ganze Zahlen sind, die gemeinsam alle Werte im Bereich 1 bis zur Anzahl der Kreisbögen n beziehungsweise n' durchlaufen.

Die Profile Schneckenelemente sind dadurch charakterisiert, dass sie allein mit Winkellineal und Zirkel konstruiert werden können. So wird der tangentiale Übergang zwischen dem j-ten und dem (j+1)-ten Kreisbogen des erzeugenden Schneckenprofils konstruiert, indem um den Endpunkt des j-ten Kreisbogens ein Kreis mit dem Radius $r_{j+1}$ geschlagen wird und der näher zum Drehpunkt des erzeugenden Schneckenprofils gelegene Schnittpunkt dieses Kreises mit der Geraden, die durch den Mittelpunkt und den Endpunkt des j-ten Kreisbogens definiert ist, der Mittelpunkt des (j+1)-ten Kreisbogens ist. Praktischerweise wird man anstelle von Winkellineal und Zirkel ein Computerprogramm zur Konstruktion der Schneckenprofile verwenden.

Die erfindungsgemäßen Schneckenelemente können unsymmetrisch oder symmetrisch sein; bevorzugt sind erfmdungsgemäße Schneckenelemerite symmetrisch. Symmetrische Schneckenelemente können achsensymmetrisch oder punktsymmetrisch sein; bevorzugt sind erfindungsgemäße Schneckenelemente achsensymmetrisch.

Ein achsensymmetrisches Schneckenprofil mit Gangzahl Z kann in 2Z symmetrische Teile aufgeteilt werden, wobei die symmetrischen Teile durch Spiegelung an den Symmetrieachsen ineinander überführt werden können. Aufgrund seiner Symmetrie ist das Profil eines achsensymmetrischen Schneckenelements mit einer Gangzahl Z also durch einen Profil-Abschnitt in einem Ausschnitt von 360°/(2·Z), der zwischen zwei Symmetrieachsen des Profils liegt, vollständig definiert. Das restliche Profil ergibt sich durch Spiegelung des Profil-Abschnitts an den Z Symmetrieachsen, die sich im Drehpunkt schneiden und den Winkel von 360° um den Drehpunkt in 2·Z Winkel der Größe 360°/(2·Z) unterteilen. Bei achsensymmetrischen Schneckenelementen sind ferner die korrespondierenden Schneckenprofile auf benachbarten Wellen (erzeugendes und erzeugtes Profil) gleich, bzw. lassen sich durch Rotation zur Deckung bringen [1].

Analoges gilt für punktsymmetrische Schneckenprofile, bei dem sich die symmetrischen Teile jeweils durch Punktspiegelung am Symmetriezentrum ineinander überführen lassen.

Im Folgenden wird eine besondere Ausführungsform erfindungsgemäßer Schneckenelemente beschrieben, die dadurch charakterisiert ist, dass die Schneckenelemente achsensymmetrisch sind. Die Gangzahl Z solcher erfindungsgemäßer achsensymmetrischer Schneckenelemente beträgt bevorzugt 2 bis 8; besonders bevorzugt beträgt sie 2 bis 4.
Die Profilkurve des Querschnitts erfindungsgemäßer achsensymmetrischer Schneckenelemente lässt sich in 2·Z Profil-Abschnitte unterteilen, die durch Achsenspiegelung an den Symmetrieachsen des Profils ineinander überführt werden können. Die Zahl der Kreisbögen n, die einen der Profil-Abschnitte bilden, beträgt bevorzugt 2 bis 8, besonders bevorzugt 2 bis 4.

Das Profil achsensymmetrischer erfindungsgemäßer Schneckenelemente mit der Gangzahl Z zeichnet sich dadurch aus, dass es innerhalb eines Profil-Abschnitts in einem Ausschnitt von 360°/(2·Z) nur einen einzigen Punkt $P_A$ gibt, der einen Abstand vom Drehpunkt hat, der dem Außenradius ra des Schneckenelements entspricht. Anders ausgedrückt gibt es nur einen Punkt $P_A$ innerhalb des Profil-Abschnitts, der auf einem Kreis um den Drehpunkt mit dem Außenradis ra (Außenkreis) liegt.
Während bei Schneckenprofilen nach dem Stand der Technik alle Punkte im Bereich des Kammwinkels KW das Gehäuse mit engem Spalt abreinigen (siehe z.B. Figur 1), ist es beim Profil achsensymmetrischer erfindungsgemäßer Schneckenelemente nur der ausgezeichnete Punkt $P_A$ auf dem Außenradius (siehe z.B. Figur 2a).

Aus praktischen Gründen soll der weiteren Beschreibung ein kartesisches Koordinatensystem zu Grunde gelegt werden, dessen Ursprung durch den Drehpunkt D eines Schneckenelements gebildet wird. Die x-Achse des kartesischen Koordinatensystems verläuft durch den Punkt $P_A$; die y-Achse steht im Drehpunkt D senkrecht auf der x-Achse. In Figur 2a ist ein solches Koordinatensystem gezeigt.
Weiterhin ist es sinnvoll, dimensionslose Kennzahlen zu verwenden, um die Übertragbarkeit auf unterschiedliche Extruderbaugrößen zu vereinfachen. Als Bezugsgröße für geometrische Größen wie zum Beispiel Längen oder Radien bietet sich der Achsabstand a an, da diese Größe an einem Extruder nicht verändert werden kann. Für die Figuren gelten folgende Konventionen: Die Koordinaten x und y haben ihren Ursprung im Drehpunkt einer der Wellen. Alle Winkelangaben erfolgen im Bogenmaß. Alle übrigen Maßangaben sind auf den Achsabstand normiert und werden durch Großbuchstaben dargestellt: A = a/a; $R_j$ = $r_j$/a; RA = ra/a; RI = ri/a usw.

Der Profil-Abschnitt eines erfindungsgemäßen achsensymmetrischen Schneckenelements ist dadurch gekennzeichnet, dass er sich zwischen dem Punkt $P_A$, der auf dem Außenradius des Profils liegt, und einem Punkt $P_I$, der auf dem Kernradius des Profils liegt, aus tangential ineinander übergehenden Kreisbögen zusammensetzt, wobei die Geraden $DP_A$ und $DP_I$, die durch die Punkte $P_A$ und $P_I$ laufen und sich im Drehpunkt D schneiden, einen Winkel von 360°/(2·Z) einschließen.

In einer besonderen Ausführungsform setzt sich der Profil-Abschnitt eines erfindungsgemäßen Schneckenelements zwischen den Punkten $P_A$ und $P_I$ aus genau zwei Kreisbögen zusammen. Die Kreisbögen gehen in einem Punkt $P_{FP}$ ineinander über und bilden erfindungsgemäß über den gesamten Profil-Abschnitt eine stetig differenzierbare Kurve. Im Punkt $P_{FP}$ tangieren die Kreisbögen eine Gerade FP. Die Gerade FP verläuft in einem Abstand vom Drehpunkt, der dem halben Achsabstand A entspricht, und sie besitzt eine Steigung (im Bogenmaß) von - $1/\tan(\square/(2 \cdot Z))$. Der Punkt $P_{FP}$ hat einen Abstand vom Schnittpunkt einer Tangente an den Außenkreis im Punkt $P_A$ mit der Geraden FP, der dem Abstand zwischen dem Schnittpunkt und $P_A$ entspricht. Eine Orthogonale, die vom Punkt $P_{FP}$ zur Geraden FP gebildet wird, schneidet die Gerade $DP_A$, die durch den Punkt $P_A$ und den Drehpunkt geht, im Mittelpunkt $M_1$ eines ersten profilerzeugenden Kreisbogens 1, während sie die Gerade $DP_I$, die durch den Punkt $P_I$ und den Drehpunkt geht, im Mittelpunkt $M_{1'}$ des anderen profilerzeugenden Kreisbogens 1' schneidet (siehe zur Verdeutlichung Figur 2a). Der Radius $R_I^{2K}$ des profilerzeugenden Kreisbogens 1 entspricht somit der Strecke $M_1 P_A$; der Radius $R_{I'}^{2K}$ des Kreisbogens 1' entspricht der Strecke $M_1 \cdot P_I$.

In einer weiteren besonderen Ausführungsform setzt sich der Profil-Abschnitt eines erfindungsgemäßen Schneckenelements zwischen den Punkten $P_A$ und $P_I$ aus genau drei Kreisbögen zusammen. Man erhält damit einen zusätzlichen Freiheitsgrad und kann das Profil im Bereich des Punktes $P_A$, der die Zylinderwand abreinigt, durch Wahl eines kleinen Radius schlanker gestalten, wodurch die Energiedissipation weiter reduziert wird.

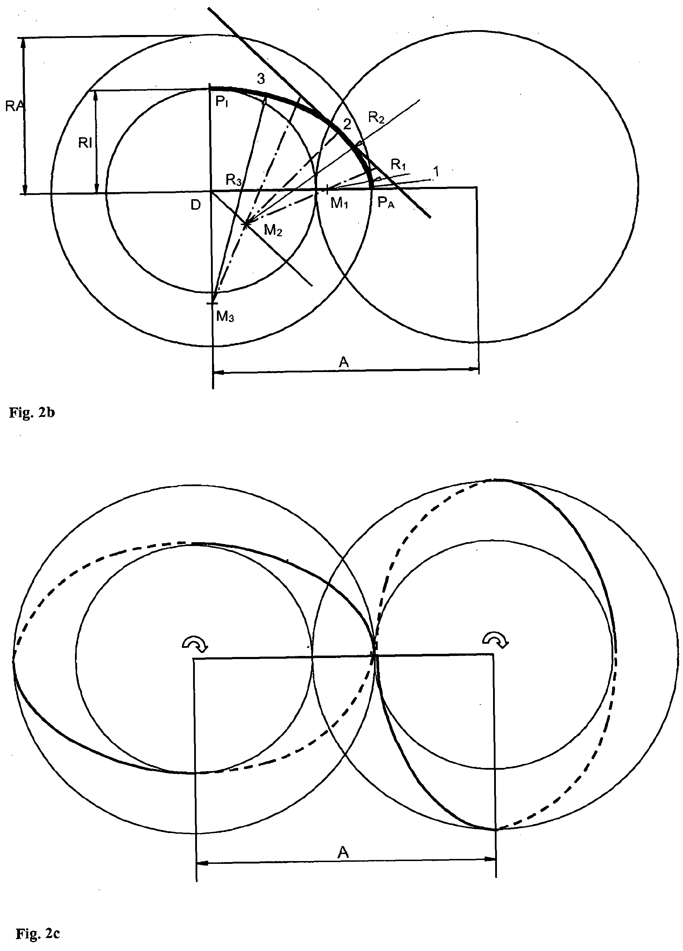

Figur 2b zeigt beispielhaft einen Profil-Abschnitt eines erfindungsgemäßen zweigängigen Schneckenelements aus drei Kreisbögen. Der Radius $R_1$ des Kreisbogens 1, der im Punkt $P_A$ anschließt, ist in den Grenzen $0 < R_1 < R_I^{2K}$ frei wählbar. Sein Mittelpunkt $M_1$ liegt auf der Verbindungsstrecke D-$P_A$.

Der Radius des Kreisbogens 3, der im Punkt $P_I$ anschließt, hat einen Radius von $R_3 = A - R_1$. Sein Mittelpunkt $M_3$ liegt auf der Strecke D-$P_I$.

Zwischen diesen beiden Kreisbögen schließt sich stetig differenzierbar ein Kreisbogen 2 mit dem Radius $R_2 = A/2$ an. Sein Mittelpunkt $M_2$ befindet sich im Abstand $A/2 - R_1$ vom Punkt $P_1$ und im Abstand $R_3 - A/2$ vom Punkt $M_3$.

Der Kreisbogen 1 wird begrenzt durch $P_A$ einerseits und durch den Schnittpunkt mit der Geraden durch $P_1$ und $P_2$ andererseits.

Der Kreisbogen 3 wird begrenzt durch $P_I$ einerseits und durch den Schnittpunkt mit der Geraden durch $M_2$ und $M_3$ andererseits.

Durch die Wahlfreiheit eines der Radien $R_1$, oder $R_3$ ist es möglich, für den gegebenen Achsabstand A verschiedene erfindungsgemäße, exakt abschabende Schneckenprofile zu konstruieren. Somit ist es auch möglich, erfindungsgemäße asymmetrische Schneckenprofile zu konstruieren, indem an jeweils korrespondierenden Ausschnitten der Größe 360°/(2·Z) des Schneckenprofils auf beiden Wellen dasselbe Schneckenprofil vorgesehen wird, Ausschnitte der Größe 360°/(2·Z) auf einer Welle jedoch unterschiedlich gestaltet werden. Solche Konstruktionen sind dann sinnvoll, wenn dem Fördergut im Rahmen von Dispergieraufgaben spezielle Deformationen aufgeprägt werden sollen, beispielsweise eine langsame Kompression gefolgt von einer schnellen Expansion.

Schneckenelemente, die sich innerhalb eines Profilabschnitts der Größe 360°/(2·Z) aus mehr als drei Kreisbögen zusammensetzen, gehören ebenfalls zum Gegenstand der vorliegenden Erfindung. Erfindungsgemäß gehen die Kreisbögen an ihren Anfangs- und Endpunkten tangential ineinander über.

Das Verhältnis RA = ra/a vom Außenradius ra des Schneckenelements zum Achsabstand a beträgt für zweigängige erfindungsgemäße Schnecken bevorzugt zwischen 0,54 und 0,7 und besonders bevorzugt zwischen 0,58 und 0,63, für dreigängige Schnecken bevorzugt zwischen 0,53 und 0,57 und besonders bevorzugt zwischen 0,54 und 0,56, sowie für viergängige Schnecken bevorzugt zwischen 0,515 und 0,535.

Die erfindungsgemäßen Schneckenelemente können als Förderelemente oder Knetelemente oder Mischelemente ausgebildet sein.

Ein Förderelement zeichnet sich bekanntlich dadurch aus (siehe zum Beispiel [1], Seiten 227 - 248), dass das Schneckenprofil in Achsrichtung kontinuierlich schraubenförmig verdreht und fortgesetzt wird. Dabei kann das Förderelement rechts- oder linksgängig sein. Die Steigung t des Förderelements kann z.B. Werte von dem 0,1-fachen bis 10-fachen des Außendurchmessers annehmen, wobei unter der Steigung die axiale Länge verstanden wird, die für eine vollständige Drehung des Schneckenprofils erforderlich ist. Bevorzugt liegt die Steigung t im Bereich des 0,3-fachen bis 3-fachen des Außendurchmessers. Die axiale Länge eines Förderelements wird aus praktischen Gründen bevorzugt in ganzzahligen Vielfachen von t/Z ausgeführt.

Ein Knetelement zeichnet sich bekanntlich dadurch aus (siehe zum Beispiel [1], Seiten 227 - 248), dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,02-fachen bis 2-fachen des Außendurchmessers. Der axiale Abstand zwischen zwei benachbarten Knetscheiben liegt bevorzugt im Bereich des 0,001-fachen bis 0,1-fachen des Außendurchmessers.

Mischelemente werden bekanntlich dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Ihre Steigung t liegt bevorzugt im Bereich des 0,1-fachen bis 10-fachen des Außendurchmessers. Die axiale Länge eines Mischelements wird analog zu den Förderelementen bevorzugt in ganzzahligen Vielfachen von t/Z ausgeführt. Die Durchbrüche haben bevorzugt die Form einer u- oder v-förmigen Nut. Wird das Mischelement ausgehend von einem förderaktiven Element gebildet, so werden die Nuten bevorzugt gegenfördernd oder achsparallel angeordnet.

Gegenstand der vorliegenden Erfindung ist weiterhin ein Verfahren zur Erzeugung der erfindungsgemäßen Schneckenelemente. Erfindungsgemäße Schneckenelemente zeichnen sich durch ein Profil aus, das durch eine stetig differenzierbare Kurve dargestellt werden kann. Das erfindungsgemäße Verfahren zur Erzeugung von Schneckenelementen für mehrwellige Schneckenmaschinen mit paarweise gleichsinnigen und paarweise exakt abschabenden Schneckenwellen in einem Achsabstand a mit zwei oder mehr Schneckengängen ist dadurch gekennzeichnet, dass die Schneckenprofile im gesamten Querschnitt aus n Kreisbögen gebildet werden, wobei n eine ganze Zahl größer oder gleich 4 ist.

Das Verfahren kann dabei die Merkmale aufweisen, dass

- ein Außenradius ra des erzeugenden Schneckenprofils größer als 0 (ra>0) und kleiner als der Achsabstand (ra<a) gewählt wird,
- ein Kernradius ri des erzeugenden Schneckenprofils größer als 0 (ri>0) und kleiner oder gleich ra (ri≤ra) gewählt wird,
- die Kreisbögen nacheinander durch Festlegung ihrer Position und Größe so angeordnet werden, dass alle Kreisbögen des erzeugenden Schneckenprofils tangential ineinander übergehen und die Kreisbögen ein geschlossenes, konvexes Schneckenprofil bilden, wobei jeder der Kreisbögen des erzeugenden Schneckenprofils innerhalb oder auf den Grenzen eines Kreisrings mit dem Außenradius ra und dem Kernradius ri liegt, deren Mittelpunkte auf dem Drehpunkt des erzeugenden Schneckenprofils liegen, mindestens einer der Kreisbögen des erzeugenden Schneckenprofils den Außenradius ra des erzeugenden Schneckenprofils in einem Punkt $P_A$ berührt und mindestens einer der Kreisbögen des erzeugenden Schneckenprofils den Kernradius ri des erzeugenden Schneckenprofils in einem Punkt $P_1$ berührt,
- sich die n' Kreisbögen des erzeugten Schneckenprofils aus den n Kreisbögen des erzeugenden Schneckenprofils dadurch ergeben, dass

  ○ die Anzahl der Kreisbögen n' des erzeugten Schneckenprofils gleich der Anzahl der Kreisbögen n des erzeugenden Schneckenprofils ist,
  ○ der Außenradius ra' des erzeugten Schneckenprofils gleich der Differenz aus Achsabstand und Kernradius ri des erzeugenden Schneckenprofils ist (ra' = a-ri),
  ○ der Kernradius ri' des erzeugten Schneckenprofils gleich der Differenz aus Achsabstand a und Außenradius ra des erzeugenden Schneckenprofils ist (ri' = a-ra),
  ○ der Winkel $\alpha_j$' des j'-ten Kreisbogens des erzeugten Schneckenprofils gleich dem Winkel $\alpha_j$ des j-ten Kreisbogens des erzeugenden Schneckenprofils ist, wobei j und j' ganze Zahlen sind, die gemeinsam alle Werte im Bereich von 1 bis zur Anzahl der Kreisbögen n beziehungsweise n' durchlaufen,
  ○ die Summe von Radius $r_j$' des j'-ten Kreisbogens des erzeugten Schneckenprofils und Radius $r_j$ des j-ten Kreisbogens des erzeugenden Schneckenprofils gleich dem Achsabstand a ist, wobei j und j' ganze Zahlen sind, die gemeinsam alle Werte im Bereich 1 bis zur Anzahl der Kreisbögen n beziehungsweise n' durchlaufen,
  ○ der Mittelpunkt des j'-ten Kreisbogens des erzeugten Schneckenprofils einen Abstand von dem Mittelpunkt des j-ten Kreisbogens des erzeugenden Schneckenprofils besitzt, der gleich dem Achsabstand a ist, und der Mittelpunkt des j'-ten Kreisbogens des erzeugten Schneckenprofils einen Abstand von dem Drehpunkt des erzeugten Schneckenprofils besitzt, der gleich dem Abstand des Mittelpunkts des j-ten Kreisbogens des erzeugenden Schneckenprofils von dem Drehpunkt des erzeugenden Schneckenprofils ist, und die Verbindungslinie zwischen dem Mittelpunkt des j'-ten Kreisbogens des erzeugten Schneckenprofils und dem Mittelpunkt des j-ten Kreisbogens des erzeugenden Schneckenprofils eine Parallele zu einer Verbindungslinie zwischen dem Drehpunkt des erzeugten Schneckenprofils und dem Drehpunkt des erzeugenden Schneckenprofils ist, wobei j und j' ganze Zahlen sind, die gemeinsam alle Werte im Bereich 1 bis zur Anzahl der Kreisbögen n beziehungsweise n' durchlaufen,
  ○ ein Anfangspunkt des j'-ten Kreisbogens des erzeugten Schneckenprofils in einer Richtung bezogen auf den Mittelpunkt des j'-ten Kreisbogens des erzeugten Schneckenprofils liegt, die entgegengesetzt derjenigen Richtung ist, die ein Anfangspunkt des j-ten Kreisbogens des erzeugenden Schneckenprofils bezogen auf den Mittelpunkt des j-ten Kreisbogens des erzeugenden Schneckenprofils besitzt, wobei j und j' ganze Zahlen sind, die gemeinsam alle Werte im Bereich 1 bis zur Anzahl der Kreisbögen n beziehungsweise n' durchlaufen.

Das erfindungsgemäße Verfahren ist dadurch charakterisiert, dass es sich allein mit Winkellineal und Zirkel ausführen lässt. So wird der tangentiale Übergang zwischen dem j-ten und dem (j+1)-ten Kreisbogen des erzeugenden Schneckenprofils konstruiert, indem um den Endpunkt des j-ten Kreisbogens ein Kreis mit dem Radius $r_{j+1}$ geschlagen wird und der näher zum Drehpunkt des erzeugenden Schneckenprofils gelegene Schnittpunkt dieses Kreises mit der Gerade, die durch den Mittelpunkt und den Endpunkt des j-ten Kreisbogens definiert ist, der Mittelpunkt des (j+1)-ten Kreisbogens ist. Es empfiehlt sich, das Verfahren zur Erzeugung von Schneckenprofilen auf einem Computer durchzuführen. Die Abmessungen der Schneckenelemente liegen dann in einer Form vor, in der sie einer CAD-Fräsmaschine zur Erzeugung der Schneckenelemente zugeführt werden können. Gegenstand der vorliegenden Erfindung ist damit auch ein Computerprogrammprodukt, mit Programmcodemitteln zum Ausführen des erfindungsgemäßen Verfahrens zur Erzeugung von erfindungsgemäßen Schneckenprofilen auf einem Computer. In einer bevorzugten Ausführungsform steht einem Benutzer des Computerprogrammprodukts eine bevorzugt grafische Benutzeroberfläche zur Verfügung, mit deren Hilfe er die zu wählenden Parameter (Zahl der Kreisbögen des erzeugenden und erzeugten Schneckenprofils, Radien, Winkel) eingeben kann. Bevorzugt erhält er dabei Unterstützung von dem Computersystem, das den Benutzer darauf hinweist, wenn sich durch Wahl der Parameterwerte Schneckenprofile ergeben, die nicht paarweise exakt abschabend sind. Bevorzugt wird er bei der Eingabe der Parameterwerte in der Weise unterstützt, dass erlaubte Parameterwertebereiche angezeigt werden. Unter erlaubten Parameterwerten werden solche Kombinationen von Parameterwerten verstanden, die zu paarweise exakt abschabenden Schneckenprofilen führen.

In einer bevorzugten Ausführungsform werden nicht nur die Profile sondern ganze Schneckenelemente virtuell am Computer konstruiert. Das Ergebnis der Konstruktion wird bevorzugt in Form von Konstruktionszeichnungen auf einem Bildschirm oder an einem Drucker ausgegeben. Ebenso ist es denkbar, das Ergebnis als elektronische Datei auszugeben, die in einer bevorzugten Ausführungsform an eine CAD-Fräsmaschine zur Erzeugung der entsprechenden Schneckenelemente weitergegeben werden kann.

Nachdem das Profil auf die beschriebene Weise erzeugt worden ist, können die erfindungsgemäßen Schneckenelemente z.B. mit einer Fräsmaschine erzeugt werden. Bevorzugte Materialien zur Erzeugung der Schneckenelemente sind Stähle, insbesondere Nitrierstähle, Chrom-, Werkzeug- und Edelstähle, sowie pulvermetallurgisch hergestellte metallische Verbundwerkstoffe auf Basis von Eisen, Nickel oder Kobalt.

Das erfindungsgemäße Verfahren erlaubt es, das Profil einer Schnecke von Grund auf so zu gestalten, dass es für eine vorgegebene Aufgabe optimal geeignet ist. Die nach dem Stand der Technik bekannten Schneckenelemente sind zum größten Teil nicht auf eine konkrete Aufgabe hin optimal gestaltet. Vielmehr liefern die Hersteller Schneckenelemente (Förder-, Knet- und Mischelemente) aus einem festliegenden Baukastensystem unabhängig von einer konkreten Aufgabe. Durch das erfindungsgemäße Verfahren ist es möglich, das Profil von selbstreinigenden Schneckenelementen nahezu völlig frei zu gestalten und somit auf eine Anwendung hin durch kleinste Variation von Parametern für die jeweilige Anwendung zu optimieren. In diesem Zusammenhang sei darauf hingewiesen, dass die Zahl der Kreisbögen zur Erzeugung von Schneckenprofilen nicht limitiert ist. Dadurch ist es möglich, Schneckenprofile, die nicht aus Kreisbögen aufgebaut und damit nicht selbstreinigend sind, durch eine ausreichend hohe Anzahl an Kreisbögen mit einer gewünschten Genauigkeit zu approximieren. Dabei ist das mittels Kreisbögen approximierte Profil natürlich selbstreinigend.

Es sei auch darauf hingewiesen, dass sich aus einem (erzeugenden oder erzeugten) Schneckenprofil das entsprechende Längsschnittprofil berechnen lässt. Bevorzugt wird jeder Kreisbogen eines Schneckenprofils genutzt, um mittels einer expliziten Funktion einen zu diesem Kreisbogen gehörigen Teil des Längsschnitts zu berechnen. Zur Berechnung des Abstandes s eines Punktes eines Kreisbogens eines Schneckenprofils wird in einem ersten Schritt der Schnittpunkt (Sx, Sy) einer Geraden g, dadurch charakterisiert, dass die besagte Gerade in der Ebene des Schneckenprofls liegt, durch den Drehpunkt des Schneckenprofils führt und die Orientierung der Gerade durch den Winkel φ gegeben ist, mit einem Kreisbogen kb, charakterisiert durch seinen Radius r und die Lage seines Mittelpunktes (Mx, My), bestimmt. In einem zweiten Schritt wird der Abstand des Schnittpunktes (Sx, Sy) vom Drehpunkt des Schneckenprofils berechnet. Die Berechnung eines Schnittpunkts einer Geraden mit einem Kreisbogen lässt sich durch eine explizite Funktion darstellen. Gleiches gilt für die Abstandsberechnung. Für den Abstand gilt daher s=s(φ, r, Mx, My). Der Winkel φ lässt sich bei bekannter Steigung t eines Schneckenelements über φ/2π*t in eine axiale Position z_ax umrechnen, so das für den Abstand s=s(z_ax, r, Mx, My)=s(φ/2π*t, r, Mx, My) gilt. Die Funktion s(z_ax, r, Mx, My) beschreibt den gesuchten Längsschnitt für einen Kreisbogen des Schneckenprofils.

Gegenstand der vorliegenden Erfindung ist weiterhin die Verwendung der erfindungsgemäßen Schneckenelemente in mehrwelligen Schneckenmaschinen. Bevorzugt werden die erfindungsgemäßen Schneckenelemente in zweiwelligen Schneckenmaschinen eingesetzt. Die Schneckenelemente können in den mehrwelligen Schneckenmaschinen in Form von Knet-, Mischoder Förderelementen vorliegen. Es ist ebenso möglich, Knet-, Förder-, und Mischelemente in einer Scheckenmaschine miteinander zu kombinieren. Die erfindungsgemäßen Schneckenelemente können auch mit anderen Schneckenelementen, die z.B. nach dem Stand der Technik bekannt sind, kombiniert werden.

Die erfindungsgemäßen Schneckenelemente bilden in mehrwelligen Schneckenmaschinen mit paarweise gleichsinnig und paarweise exakt abschabenden Schneckenwellen einen über ihren gesamten Umfang laufenden Kanal. Dabei weist der Kanal eine abwechselnd zu- und abnehmende Kanalbreite auf. Ein solcher Kanal wird hier als konvergent-divergenter Kanal bezeichnet. In einem solchen konvergent-divergenten Kanal tritt im Betrieb über seine gesamte Länge eine Kombination aus Scherströmung und Dehnströmung auf, die eine sehr gute Dispergierwirkung hat. Die Energieeinleitung ist im Vergleich zu herkömmlichen, nach dem Stand der Technik bekannten Schneckenelementen mit einem Knick im Profil reduziert.

Exzentrisch angeordnete Kreisscheiben bilden ebenfalls einen konvergent-divergenten Kanal. Die erfindungsgemäßen Schneckenelemente weisen jedoch einen geringeren Umfangsbereich auf, in dem ein sehr enger Spalt vorliegt, als exzentrisch angeordnete Kreisscheiben. Daher ist die Energieeinleitung bei der Verwendung von erfindungsgemäßen Schneckenelementen in Mehrwellenschneckenmaschinen gegenüber der Verwendung exzentrisch angeordneter Kreisscheiben reduziert.

Die Erfindung wird nachstehend anhand der Figuren beispielhaft näher erläutert ohne sie jedoch auf diese zu beschränken.

Sinnvollerweise arbeitet man mit dimensionslosen Kennzahlen, um die Übertragbarkeit auf unterschiedliche Extruderbaugrößen zu vereinfachen. Als Bezugsgröße für geometrische Größen wie zum Beispiel Längen oder Radien bietet sich der Achsabstand a an, da diese Größe an einem Extruder nicht verändert werden kann.

Für die Figuren gelten folgende Konventionen: Die Koordinaten x und y haben ihren Ursprung im Drehpunkt einer der Wellen. Alle Winkelangaben erfolgen im Bogenmaß. Alle übrigen Maßangaben sind auf den Achsabstand normiert und werden durch Großbuchstaben dargestellt: $A = a/a$; $R_j = r_j/a$; $RA = ra/a$; $RI = ri/a$ T $= t/a$ usw. Mx und My sind die x- und y-Koordinaten des Kreismittelpunkts eines profilerzeugenden Kreisbogens, R ist der auf den Achsabstand a normierte Radius und $\alpha$ der Bogenwinkel des Kreisbogens. Weiterhin bedeuten RG = normierter Gehäuseradius, RV = normierter virtueller Gehäuseradius, RA = normierter Außenradius des exakt abschabenden Profils, RF = normierter Außenradius der zu fertigenden Schnecke, S = normiertes Spiel der Schnecken untereinander (Spalt), D = normiertes Spiel der Schnecke zum Gehäuse, VPR = normierter Betrag der Profilverschiebung, VPW Winkel der Profilverschiebung im Bogenmaß, VLR = normierter Betrag der Verschiebung der linken Welle, VLW = Winkel der Verschiebung der linken Welle, VRR = normierter Betrag der Verschiebung der rechten Welle, VRW = Winkel der Verschiebung der rechten Welle.

Figur 1 zeigt im Querschnitt zwei in einem Abstand A voneinander angeordnete exakt abschabende, zweigängige Schneckenelemente nach dem Stand der Technik. Die Schneckenelemente verfügen über dasselbe achsensymmetrische Profil. Das rechte Schneckenelement ist gegenüber dem linken um 90° gedreht. Die mit 1-1 gekennzeichneten Punkte geben die Drehpunkte der Wellen an, auf denen die Schneckenelemente angeordnet sind. Das gezeigte Profil setzt sich aus mehreren symmetrischen Abschnitten zusammen. An den Übergängen der Abschnitte treten Knicke auf (einer der Knicke ist durch einen Pfeil mit 1-2 gekennzeichnet). Im Bereich des Kammwinkels KW unterliegt das Produkt beim Betrieb einer Mehrwellenschneckenmaschine mit derartigen Schneckenelementen einer hohen Scherung ohne Dehnung.

Dieser Nachteil wird durch ein erfindungsgemäßes Schneckenelement mit einem Profil gemäß Figur 2 vermieden. Figur 2a zeigt im Querschnitt ein Viertel des Profils eines zweigängigen exakt abschabenden Schneckenelements (erzeugendes Schneckenelement). Das Profil ist achsensymmetrisch zur x- und y-Achse, sodass sich das gesamte Profil durch Spiegelung des gezeigten Viertels an der x- und y-Achse ergeben würde. Das Profil des korrespondierenden (erzeugten) Schneckenelements ergibt sich dann durch Drehung des Profils des erzeugenden Schneckenelements um einen Winkel von 90°. Der Koordinatenursprung markiert in dieser und allen weiteren Figuren den Drehpunkt D der Welle. Mit dem Außenradius RA wurde ein gestrichelter Kreis um das Profil herum gezeichnet. Die Gehäusebohrung wird durch einen dazu konzentrischen Kreis mit einem gegenüber dem Außenradius um das Spiel S vergrößerten Radius RG repräsentiert. (RG=RA+S) Das Schneckenprofil nach Figur 2a besteht aus zwei Kreisbögen, die ohne Knick ineinander übergehen. Die Koordinaten der Kreisbögen sind in Figur 2a angegeben. Der Mittelpunkt $M_1$ des Kreises 1 liegt auf der Horizontalen durch den Drehpunkt und der Mittelpunkt $M_{1'}$ des Kreises 1' auf der Vertikalen durch den Drehpunkt ($M_{1y} = 0$; $M_{1'x} = 0$). Der Übergang von Kreis 1 auf Kreis 1' erfolgt in dem Punkt $P_{FP}$, in dem beide Kreise die Gerade FP tangieren.

Die Konstruktion des gezeigten Profil-Abschnitts kann durch folgende Schritte erfolgen:

- Festlegung eines Punktes $P_A$ in einem Abstand vom Drehpunkt D des Schneckenelements, der dem Außenradius RA des Schneckenelements entspricht,
- Festlegung eines Punktes $P_I$ in einem Abstand vom Drehpunkt D des Schneckenelements, der dem Innenradius RI des Schneckenelements entspricht, wobei Punkt $P_I$ auf einer Geraden $DP_I$ durch den Punkt D liegt, die mit einer Geraden $DP_A$ durch die Punkte $P_A$ und D einen Winkel von 360°/(2·Z) einschließt,
- Festlegung einer Geraden FP mit einem Abstand vom Drehpunkt D, der dem halben Achsabstand A des Schneckenelements entspricht, und mit einer Steigung im Bogenmaß von $-1/\tan(\pi/(2 \cdot Z))$,
- Festlegung des Schnittpunktes der Tangente $T_A$ in Punkt $P_A$ an den Außenkreis mit Radius RA um den Drehpunkt D mit der Geraden FP und Festlegung des Punktes $P_{FP}$ auf der Geraden FP, der denselben Abstand vom Schnittpunkt hat wie $P_A$ und der vom Drehpunkt einen geringeren Abstand hat als dem Radius RA entspricht,
- Festlegung des Mittelpunkts $M_1$, der im Schnittpunkt der Orthogonalen zur Geraden FP im Punkt $P_{FP}$ mit der Geraden $DP_A$ liegt,

- Festlegung des Mittelpunkts $M_{1'}$, der im Schnittpunkt der Orthogonalen zur Geraden FP im Punkt $P_{FP}$ mit der Geraden $DP_1$ liegt,
- Erzeugen eines Kreisbogens 1 um den Mittelpunkt $M_1$ zwischen den Punkten $P_A$ und $P_{FP}$,
- Erzeugen eines Kreisbogens 1' um den Mittelpunkt $M_{1'}$ zwischen den Punkten $P_I$ und $P_{FP}$.

Figur 2b zeigt beispielhaft einen Profil-Abschnitt eines erfindungsgemäßen zweigängigen Schneckenelements aus drei Kreisen. Der Punkt D kennzeichnet den Drehpunkt des Schneckenelements (erzeugendes Schneckenelement). Im Abstand A vom Drehpunkt D befindet sich der Drehpunkt des korrespondierenden Schneckenelements (erzeugtes Schneckenelement). Um den Drehpunkt D ist ein Kreis (Innenkreis) mit dem Kernradius RI und ein Kreis (Außenkreis) mit dem Außenradius RA des Schneckenelements eingezeichnet. Innenkreis und Außenkreis bilden einen Kreisring. Alle Punkte des Profil-Abschnitts sowie des sich daraus ergebenden Gesamtprofils des erfindungsgemäßen Schneckenelements liegen auf diesem Kreisring. Punkt $P_A$ kennzeichnet einen Anfangspunkt eines ersten Kreisbogens 1 mit dem Radius $R_1$ und dem Mittelpunkt $M_1$, der auf der Verbindungsstrecke D-$P_A$ liegt. Der Punkt $P_A$ liegt auf dem Außenkreis. Punkt $P_I$ kennzeichnet einen Anfangspunkt eines Kreisbogens 3 mit dem Radius $R_3$ = A - $R_1$. Sein Mittelpunkt $M_3$ liegt auf der Strecke D-$P_I$. Zwischen dem Kreisbogen 1 und dem Kreisbogen 3 schließt sich stetig differenzierbar ein Kreisbogen 2 mit dem Radius $R_2$ = A/2 an. Sein Mittelpunkt $M_2$ befindet sich im Abstand (A/2)-$R_1$ vom Punkt $P_1$ und im Abstand $R_3$-(A/2) vom Punkt $M_3$. Durch fortlaufende Spiegelung des gezeigten Profil-Abschnitts an einer Geraden, die durch die Punkte D und $P_A$ verläuft und an einer Geraden, die durch die Punkte D und $P_I$ verläuft, lässt sich das Gesamtprofil des erfindungsgemäßen Schneckenelements (erzeugendes Schneckenelement) konstruieren. Das Profil des korrespondierenden Schneckenelements (erzeugtes Schneckenelement) ergibt sich hier einfach durch Drehung des Profils des erzeugenden Schneckenprofils um einen Winkel von 90° um den Drehpunkt D. Figur 2c zeigt ein Beispiel erfindungsgemäßer Schneckenelemente, bei denen sich die durch gestrichelte Linien gekennzeichneten Profil-Abschnitte nicht durch Achsenspiegelung mit den durch durchgezogene Linien gekennzeichneten Profil-Abschnitten zur Deckung bringen lassen. Stattdessen sind die Profile punktsymmetrisch zum Drehpunkt.

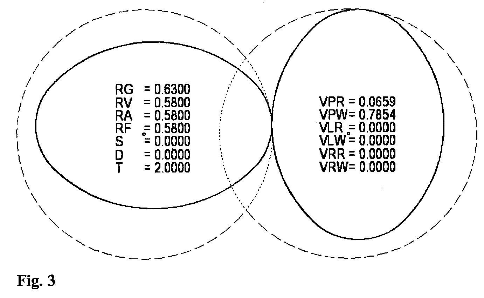

Eine besondere Ausführungsform erfindungsgemäßer Schneckenelemente ist beispielhaft in Figur 3 dargestellt. Sie ist dadurch gekennzeichnet, dass die Gehäusebohrungen mit einem größeren Radius als der Außenradius der Schneckenprofile ausgeführt sind und die Schneckenprofile paarweise gegenüber den Mittelpunkten der Gehäusebohrungen verschoben sind, die Drehpunkte (dargestellt durch kleine Kreise) in den Mitten der Gehäusebohrungen jedoch beibehalten werden. Dadurch ergibt sich überraschenderweise eine weitere, deutliche Reduktion der Energieeinleitung. Die auf diese Weise exzentrisch rotierenden Schneckenelemente können innerhalb der Gehäusebohrungen beliebig verschoben werden. In Figur 3 ist der besonders hervorzuhebende Fall dargestellt, dass die beiden Profile parallel um denselben Betrag in Richtung einer Geraden, die durch die beiden Drehpunkte führt, wie senkrecht dazu verschoben werden, bis sie die Gehäusekontur berühren. Dadurch wird erreicht, dass die Schnecken sich gegenseitig exakt abschaben, jedoch nur jeweils einer der beiden Schneckenkämme jeder Welle das Gehäuse exakt abschabt. Diese Anordnung weist eine vollständige Abreinigung aller Oberflächen bei gleichzeitig reduzierter Energieeinleitung auf.

Bis hierher wurden nur exakt abschabende Schneckenprofile behandelt. Bei technisch ausgeführten Maschinen ist es aber erforderlich, von der exakt abschabenden Geometrie insofern abzuweichen, als exakt definierte Spalte bei der Abreinigung eingehalten werden. Dies ist notwendig, um metallisches "Fressen" zu verhindern, um Fertigungstoleranzen auszugleichen und um übermäßige Energiedissipation in den Spalten zu vermeiden. Zur Erzeugung gleichmäßiger Spalte sind verschiedene Strategien möglich. Am weitesten verbreitet ist die Erzeugung von Spalten, die in einem Längsschnitt durch die Maschine äquidistant sind. Die Vorgehensweise zur Erzeugung der entsprechenden Schneckenprofile wurde in [1] auf den Seiten 103ff dargestellt. Die Regeln zur Erzeugung von Schneckenprofilen mit definierten Spalten sind auf die erfindungsgemäßen Schneckenelemente anwendbar.

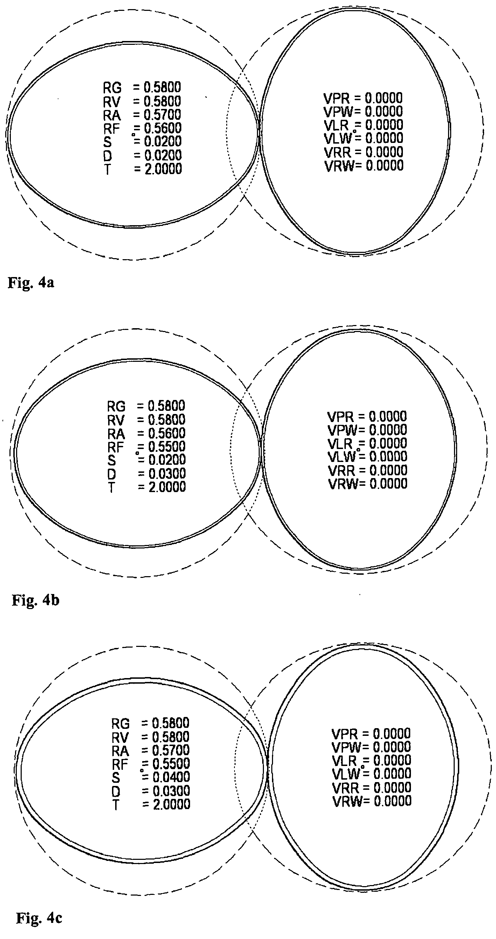

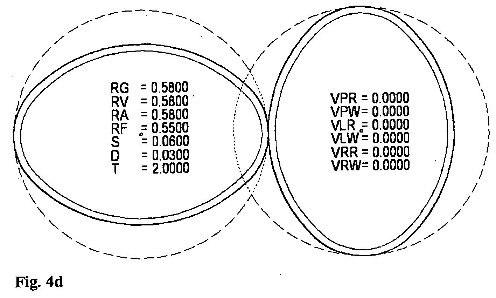

Figur 4 zeigt Beispiele von Profilen erfindungsgemäßer Schneckenelemente mit Spalten (Spielen). In Figur 4a wurde der Spalt S bei der Abreinigung der Schnecken untereinander gleich groß gewählt wie der Spalt D bei der Abreinigung des Gehäuses. In Figur 4b ist der Spalt S kleiner als D und in Figur 4c und 4d ist umgekehrt D kleiner als S.

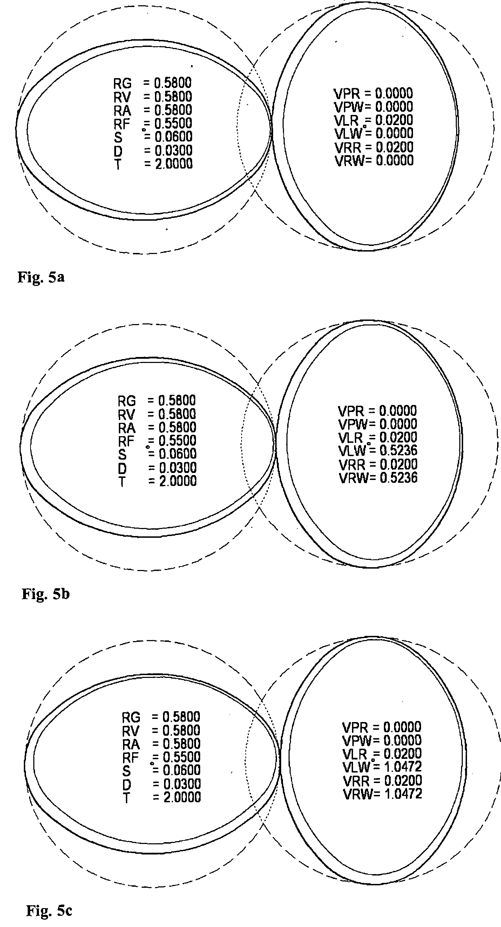

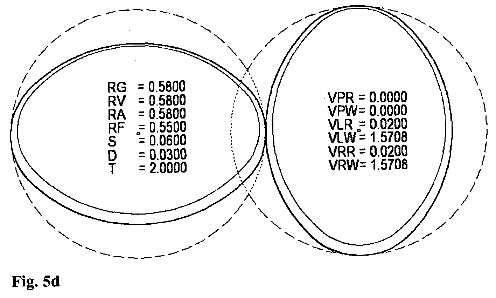

Mit Figur 5 wird aufgezeigt, dass exzentrische Profile auch dadurch erhalten werden, dass man ein Schneckenprofil mit Spalten konstruiert und anschließend die Profile innerhalb der Spalte verschiebt. Die Profile von Abbildung 5a-d sind identisch mit dem Profil aus Abbildung 4d. Die Verschiebung erfolgt in Bezug zu einer Geraden durch die Drehpunkte der Schneckenelement in Figur 5a im Winkel von 0°, in Figur 5b im Winkel von 30°, in Figur 5c im Winkel von 60° und in Figur 5d im Winkel von 90°.

Figur 5 zeigt Beispiele, in denen beide Wellen mit demselben Verschiebevektor verschoben werden. Grundsätzlich ist es auch möglich, beide Wellen innerhalb der Spiele mit einem unterschiedlichen Vektor zu verschieben. Man erhält dann Profile, die sich mit einem Spalt abreinigen, der während einer Umdrehung der Wellen variiert.

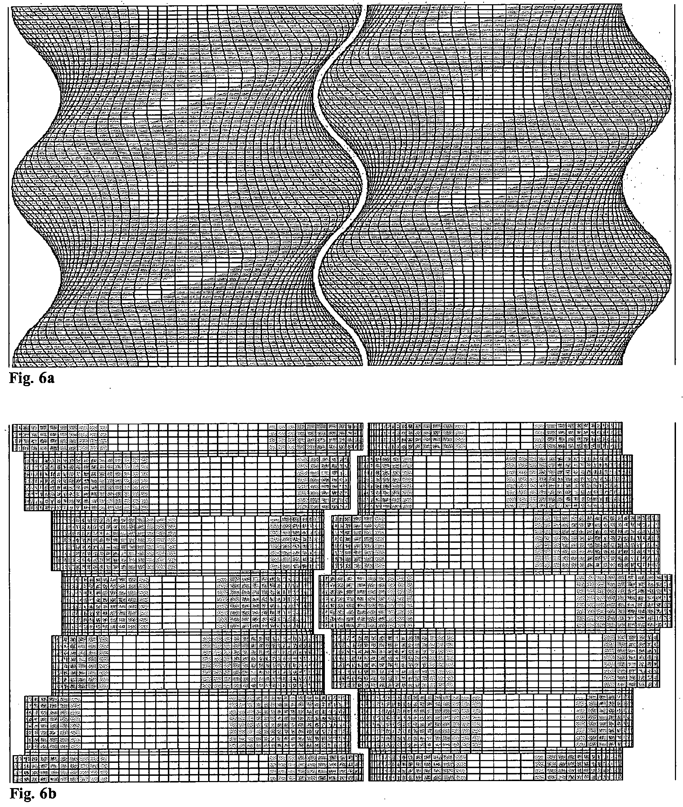

Die Förderwirkung eines Profilpaares kommt bekanntlich dadurch zustande, dass man die Profile in Achsrichtung kontinuierlich schraubenförmig verdreht. Auf diese Weise entsteht ein Fördergewinde, wie es beispielhaft in Figur 6a dargestellt ist.

Knetelemente mit erhöhter Dispergierleistung gegenüber dem Fördergewinde erhält man, indem man prismatische Scheiben aus selbstreinigenden Profilen um einen Versatzwinkel gegeneinander verdreht auf der Achse anordnet. Ein Beispiel für ein Knetelement mit sieben Knetscheiben, die mit einem Versatzwinkel von 30° auf der Achse angeordnet sind, zeigt Figur 6b.

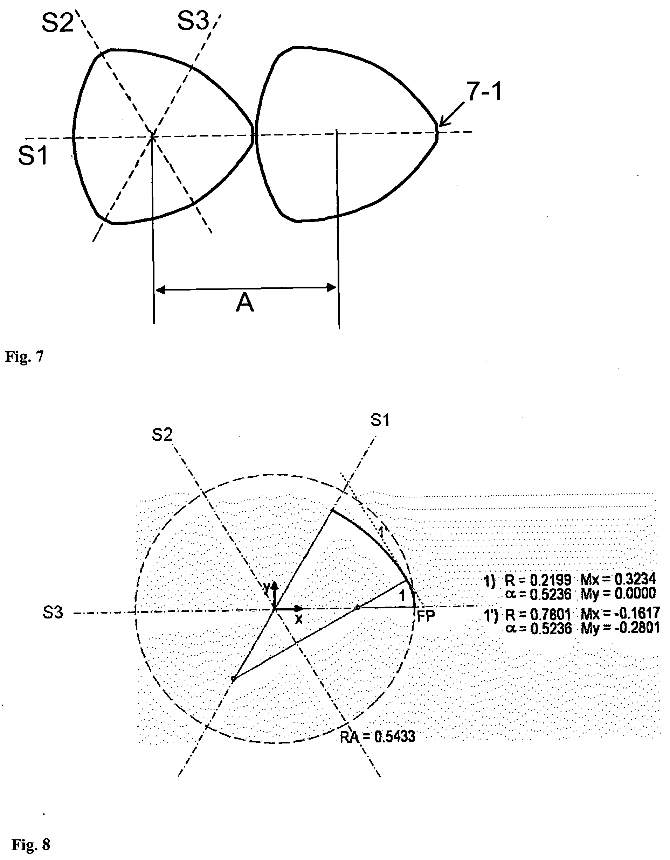

In den Figuren 1 bis 6 wurden ausschließlich zweigängige Schneckenelemente behandelt. Dieselben Prinzipien lassen sich jedoch auch auf Schneckenelemente mit drei und mehr Gängen anwenden. Figur 7 zeigt im Querschnitt zwei dreigängige Schneckenelemente nach dem Stand der Technik (siehe z.B. [1] S. 103). Das dreigängige Profil in Figur 7 besteht aus drei symmetrischen Abschnitten. An den Übergängen der Abschnitte treten Knicke auf, und das Profil bildet den Schneckenkamm aus (beispielhaft durch den Pfeil mit 7-1 markiert). Hier rotiert das Profil mit engemem Abstand zum Gehäuse und prägt mit den beschriebenen Nachteilen der Polymerschmelze eine reine Scherung auf.

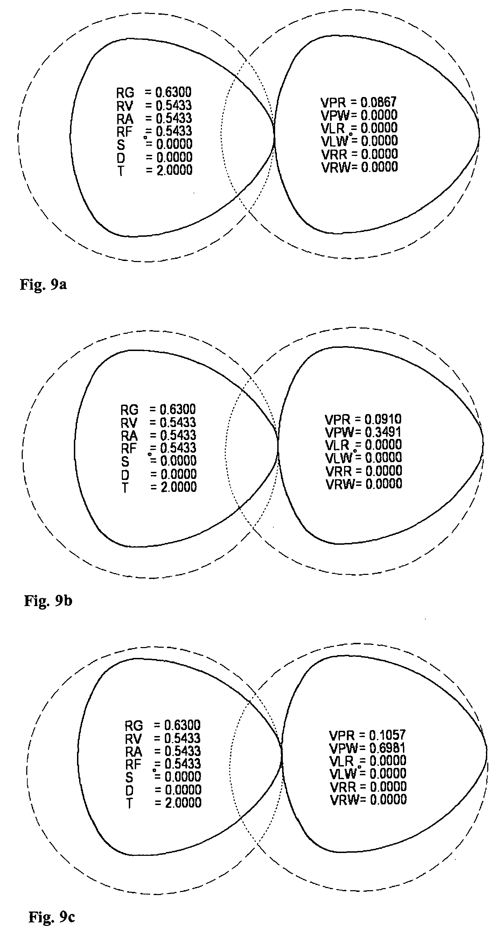

Figur 8 zeigt dagegen einen Profil-Abschnitt eines erfindungsgemäßen dreigängigen Schneckenelements. Da das Profil achsensymmetrisch bzgl. dreier in einem Winkel von 60° zueinander angeordneter Geraden (S1, S2, S3) ist, die durch den Koordinatenursprung gehen, ist hier nur ein 60°-Ausschnitt gezeigt. Das gesamte Profil ergibt sich durch fortlaufende Spiegelung der gezeigten Proflkurve an den Spiegelgeraden S1, S2 und S3. Die Profilkurve ist in dem gezeigten Abschnitt zwischen den Geraden S1 und S3 aus zwei Kreisbögen aufgebaut. Für die Schnecke ergibt sich ein konvergent-divergenter Kanal, der über seinen gesamten Umfang dem Mischgut eine Kombination aus Scher- und Dehnströmung aufprägt. Der tangentiale Übergang zwischen den profilerzeugenden Kreisen 1 und 1' erfolgt an der Stelle, an der das Profil die Gerade FP tangiert. Für dreigängige Profile verläuft die Gerade FP in einem Abstand vom halben Achsabstand vom Drehpunkt mit einer Steigung von -1,73. Die in Figur 8 gezeigte Konstruktion lässt sich in analoger Weise für alle Verhältnisse von Schneckenaußenradius zu Achsabstand von 0,5 bis 0,577 anwenden. Für die dreigängigen Profile lassen sich exzentrisch rotierende Profile konstruieren. Solche Schneckenprofile werden in Figur 9a-d gezeigt. Die Vorgehensweise ist analog zur Vorgehensweise bei den zweigängigen Profilen. Der Außenradius des Profils wird gegenüber dem Gehäuseradius verkleinert und das Profil paarweise verschoben, wobei der Drehpunkt zentrisch zum Gehäuse beibehalten wird. Besonders interessant sind Schneckenprofile, bei denen sich die Schecken untereinander vollständig abreinigen und wo das Gehäuse mit nur einem von drei Kämmen abgereinigt wird. In Figur 9a ist die Erzeugung eines solchen Profils gezeigt, indem man das Profil horizontal nach rechts verschiebt, bis der rechte Schneckenkamm an der Gehäusekontur ankommt.

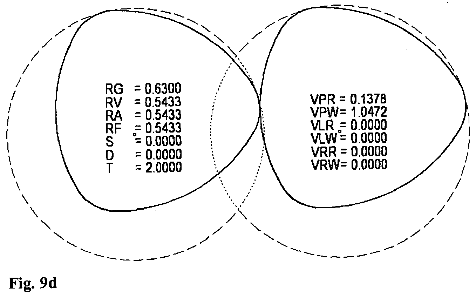

Bei dieser Anordnung entstehen symmetrische Schneckengänge zwischen dem Profil und dem Gehäuse. Weitere Anordnungen, bei denen einer der drei Schneckenkämme das Gehäuse abreinigt, erhält man bei einer Verschiebung der Profile in einem Winkel von 20° (Figur 9b) oder 40° in Bezug zu einer Geraden, die durch die Drehpunkte verläuft (Figur 9c). Bei diesen Profilen ist der entstehende Schneckengang asymmetrisch. Es entsteht mit zunehmender Verschiebung ein Bereich mit intensiverer Scherung (in den Figuren 9b und 9c oben) und ein Bereich mit weniger intensiver Scherung (in den Figuren 9b und 9c unten). Bei Verschiebung des Profils in einem Winkel von 60° in Bezug zu einer Geraden, die durch die Drehpunkte verläuft (Figur 9d), lässt sich eine Anordnung erzeugen, bei der zwei von drei Kämmen das Gehäuse abreinigen. Die Asymmetrie ist hier am stärksten ausgeprägt. Es entstehen zwei Bereiche mit sehr intensiver Scherbelastung (in Figur 9d oben) und ein Bereich mit geringer Scherbelastung (in Figur 9d unten). Die zu verarbeitende Masse wird somit stark wechselnden Beanspruchungen ausgesetzt; was bei Dispergieraufgaben hilfreich ist.

Die Erzeugung von Spalten bei der gegenseitigen Abreinigung der Profile und bei der Abreinigung des Gehäuses erfolgt in völliger Übereinstimmung mit der Vorgehensweise bei den zweigängigen Profilen.

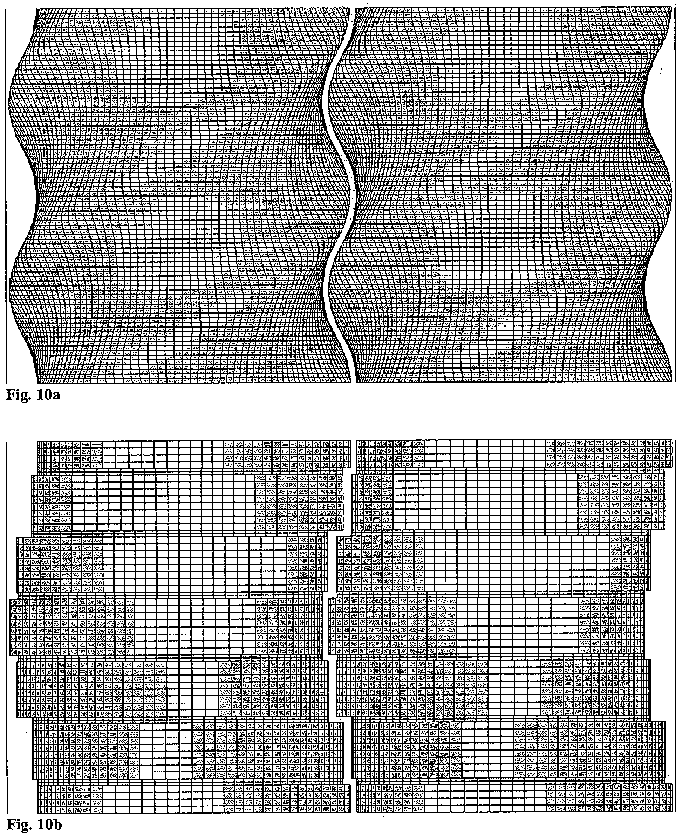

Die dreigängigen Profile können als kontinuierliches Fördergewinde nach Figur 10a oder als Knetscheiben nach Figur 10b erfindungsgemäß eingesetzt werden.

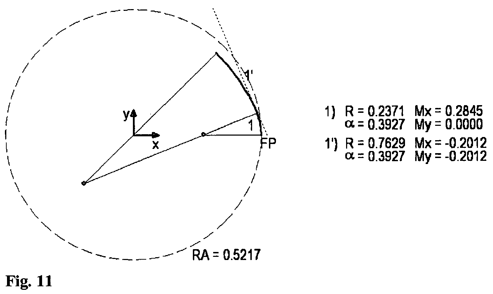

Achsensymmetrische viergängige Schneckenprofile sind durch einen 45°-Abschnitt des Schneckenprofils vollständig definiert. Figur 11 zeigt einen Profil-Abschnitt eines erfindungsgemäßen achsensymmetrischen, viergängigen Schneckenelements, der sich aus zwei Kreissegmenten zusammensetzt. Die Konstruktion ist analog für alle Verhältnisse von Schneckenaußenradius zu Achsabstand von 0,5 bis 0,541 anzuwenden.

Die Erzeugung von exzentrischen Profilen und die Erzeugung von Spalten bei der Abreinigung erfolgt auf ähnliche Art und Weise wie bei den zwei- und dreigängigen Profilen und wird hier nicht gezeigt.

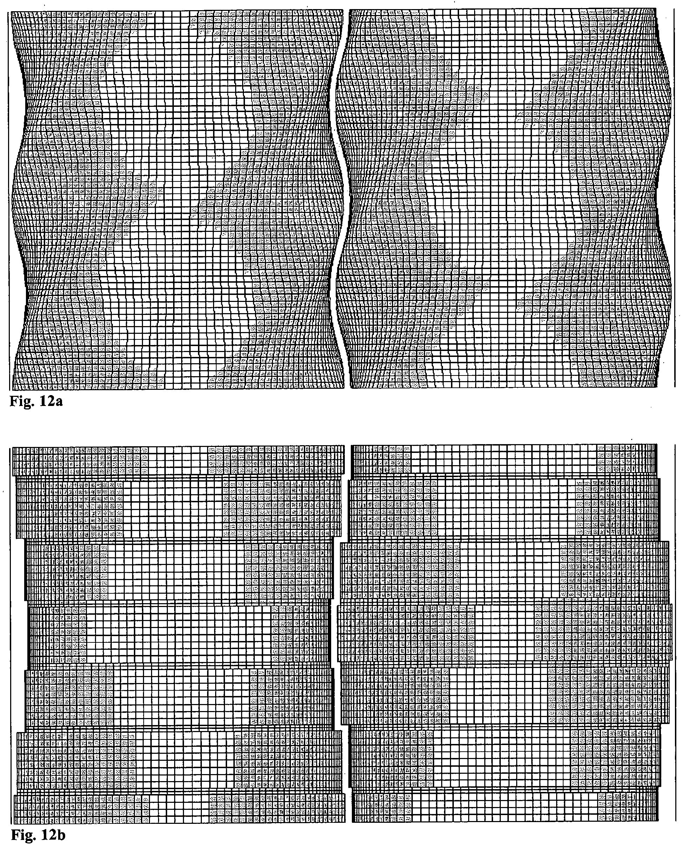

Die viergängigen Profile können als kontinuierliches Fördergewinde nach Figur 12a oder als Knetscheiben nach Figur 12b eingesetzt werden.

Erfindungsgemäße Profile mit mehr als vier Gängen können auf analoge Weise hergestellt werden. Ebenso können auf analoge Weise die Spalte variiert und exzentrische Profile erzeugt werden.

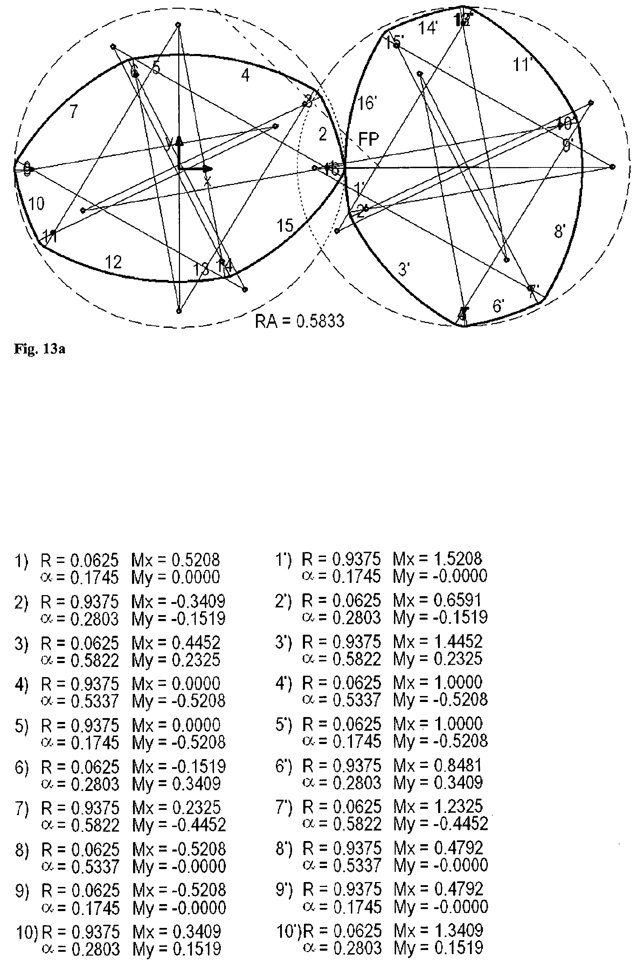

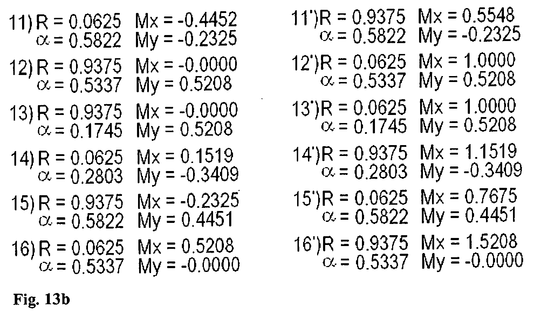

In der Figur 13a ist schematisch ein Beispiel eines erfindungsgemäßen Schneckenelementepaares im Querschnitt gezeigt. Das erzeugende Schneckenprofil wird durch das linke Schneckenprofil dargestellt. Das erzeugte Schneckenprofil wird durch das rechte Schneckenprofil dargestellt. Beide Schneckenprofile bestehen aus 16 Kreisbögen. Die Kreisbögen des erzeugenden und des erzeugten Schneckenprofils sind durch dicke, durchgezogene Linien gekennzeichnet, die mit den jeweiligen Nummern der Kreisbögen versehen sind. Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden (Begrenzungslinien). Der Schneckenaußenradius ist jeweils für das erzeugende und das erzeugte Schneckenprofil gleich groß. Im Bereich des Schneckengehäuses ist der Schneckenaußenradius durch eine dünne gestrichelte Linie gekennzeichnet, im Zwickelbereich durch eine dünne gepunktete Linie. Bedingt durch die Vielzahl der Kreisbögen und bedingt durch die Erzeugung der Figuren mittels eines Computerprogramms kann es vorkommen, dass die Nummern einzelner Kreisbögen mit Begrenzungslinien überlappen und daher schlecht lesbar sind. Trotz der teilweisen schlechten Lesbarkeit einzelner Nummern, wird der Aufbau der Profile aus dem Zusammenhang in Verbindung mit dieser Beschreibung und der Koordinatenangaben in der Fig. 13b dennoch deutlich.

Das in Figur 13a gezeigte erfindungsgemäße Paar von Schneckenprofilen ist punktsymmetrisch, aber nicht achsensymmetrisch. Die Gerade FP (gepunktet gezeichnet) wird nicht tangiert. Ein derartiges Schneckenelement erlaubt besonders große Freiheiten für die Dispergierwirkung, da die Bereiche vor und nach den Kämmen, die für die Dispergierwirkung entscheidend sind, genau auf die Aufgabe angepasst werden können, ohne auf die geometrische Einschränkung durch die Gerade FP Rücksicht nehmen zu müssen. Figur 13b zeigt für alle Kreisbögen der Fig. 13a die x- und y-Koordinaten (Mx und My) der Mittelpunkte, die Radien R und die Winkel $\alpha$ der Kreisbögen. Die Winkelangaben erfolgen im Bogenmaß; alle übrigen Maßangaben sind auf den Achsabstand normiert und daher dimensionslos.

**Patentansprüche**

1. Schneckenelemente mit zwei oder mehr Schneckengängen für paarweise gleichsinnig drehende Schneckenwellen für mehrwellige Schneckenmaschinen, wobei die Schneckenelemente, die auf den paarweise benachbarten Schneckenwellen paarweise gegenüberliegen, paarweise exakt abschabend sind, **dadurch gekennzeichnet, dass** die Schneckenprofile im gesamten Querschnitt jeweils durch eine stetig differenzierbare Profilkurve darstellbar sind.

2. Schneckenelemente nach Anspruch 1, **dadurch gekennzeichnet, dass** sich ein Schneckenprofil im gesamten Querschnitt aus vier oder mehr Kreisbögen zusammensetzt, wobei die Kreisbögen an ihren Anfangs- und Endpunkten tangential ineinander übergehen.

3. Schneckenelemente nach einem der Ansprüche 1 oder 2, **dadurch gekennzeichnet, dass** sie punktsymmetrisch sind und sich die Profilkurve in einem Ausschnitt von 360°/(2·Z) aus mindestens zwei Kreisbögen zusammensetzt, wobei Z die Gangzahl der Schneckenelemente ist.

4. Schneckenelemente nach einem der Ansprüche 1 oder 2, **dadurch gekennzeichnet, dass** sie achsensymmetrisch sind und sich die Profilkurve in einem Ausschnitt von 360°/(2·Z) aus mindestens zwei Kreisbögen zusammensetzt, wobei Z die Gangzahl der Schneckenelemente ist.

5. Schneckenelemente nach Anspruch 4, **dadurch gekennzeichnet, dass** sich die Profilkurve in dem Ausschnitt aus zwei Kreisbögen zusammensetzt, wobei die Kreisbögen in einem Punkt $P_{FP}$ stetig differenzierbar ineinander übergehen, wobei der Punkt $P_{FP}$ auf einer Geraden FP liegt, deren Orthogonale im Punkt $P_{FP}$ durch die Mittelpunkte der beiden Kreisbögen verläuft.

6. Schneckenelemente nach Anspruch 5, mit einem Drehpunkt D, einem Punkt $P_A$, der auf einem Kreis um den Drehpunkt mit dem Außenradius ra des Schneckenelements liegt, einem Punkt $P_I$, der auf einem Kreis um den Drehpunkt mit dem Innenradius ri des Schneckenelements liegt, einer Geraden $DP_A$, die durch die Punkte $P_A$ und D verläuft und einer Geraden $DP_I$, die durch die Punkte $P_I$ und D verläuft, das bei Verwendung eines kartesischen Koordinatensystems mit dem Punkt D im Ursprung und dem Punkt $P_A$ auf der x-Achse **dadurch gekennzeichnet ist, dass** die Orthogonale die Gerade $DP_A$ im Mittelpunkt eines der Kreisbögen schneidet und die Gerade $DP_I$ im Mittelpunkt des anderen Kreisbogens schneidet, und dass die Gerade FP einen Abstand entsprechend dem halben Achsabstand a vom Drehpunkt und eine Steigung im Bogenmaß von -1/tan($\pi$/(2·Z)) besitzt.

7. Mehrwellige Schneckenmaschine mit paarweise gleichsinnig drehenden Schneckenwellen, wobei die Schneckenelemente, die auf den paarweise benachbarten Schneckenwellen paarweise gegenüberliegen, paarweise exakt abschabend sind und zwei oder mehr Schneckengänge aufweisen, **dadurch gekennzeichnet, dass** die Schneckenprofile im gesamten Querschnitt jeweils durch eine stetig differenzierbare Profilkurve darstellbar sind.

8. Verwendung von Schneckenelementen nach einem der Ansprüche 1 bis 6 in einer Mehrwellenschneckenmaschine.

9. Verwendung nach Anspruch 8, **dadurch gekennzeichnet, dass** die Profile der Schneckenelemente paarweise relativ zum zentrisch in der Gehäusebohrung gelegenen Drehpunkt verschoben sind.

**10.** Verfahren zur Erzeugung von Schneckenelementen für mehrwellige Schneckenmaschinen mit paarweise gleichsinnig drehenden Schneckenwellen, wobei die Schneckenelemente, die auf den paarweise benachbarten Schneckenwellen paarweise gegenüberliegen, paarweise exakt abschabend sind und zwei oder mehr Schneckengänge aufweisen, **dadurch gekennzeichnet, dass** zur Ausbildung der Schneckenprofile Kreisbögen zu einer stetig differenzierbaren Kurve zusammengesetzt werden.

**11.** Verfahren nach Anspruch 10, **dadurch gekennzeichnet, dass** sich das Schneckenprofil im gesamten Querschnitt aus vier oder mehr Kreisbögen zusammensetzt, wobei die Kreisbögen an ihren Anfangs- und Endpunkten tangential ineinander übergehen.

**12.** Computerprogrammprodukt zur Ausführung des Verfahrens nach Anspruch 10 oder 11.

**Claims**

**1.** Screw elements with two or more screw flights for paired co-directionally rotating screw shafts for multi-shaft screw machines, the screw elements, which are paired opposite each other on the paired adjacent screw shafts, being paired fully wiping, **characterized in that** the screw profiles can be represented in the entire cross section in each case by a continuously differentiable profile curve.

**2.** Screw elements according to Claim 1, **characterized in that** a screw profile is made up in the entire cross section of four or more arcs, the arcs merging tangentially with one another at their starting points and end points.

**3.** Screw elements according to either one of Claims 1 and 2, **characterized in that** they are point-symmetric and the profile curve in a segment of 360°/(2·Z) is made up of at least two arcs, where Z is the number of flights of the screw elements.

**4.** Screw elements according to either one of Claims 1 and 2, **characterized in that** they are axisymmetric and the profile curve in a segment of 360°/(2·Z) is made up of at least two arcs, where Z is the number of flights of the screw elements.

**5.** Screw elements according to Claim 4, **characterized in that** the profile curve in the segment is made up of two arcs, the arcs merging with one another at a point $P_{FP}$ in a continuously differentiable manner, the point $P_{FP}$ lying on a straight line FP, the orthogonal of which passes through the centre points of the two arcs at the point $P_{FP}$.

**6.** Screw elements according to Claim 5, with a point of rotation D, a point $P_A$, which lies on a circle around the point of rotation with the outer radius ra of the screw element, a point $P_I$, which lies on a circle around the point of rotation with the inner radius ri of the screw element, a straight line $DP_A$, which passes through the points $P_A$ and D, and a straight line $DP_I$, which passes through the points $P_I$ and D, which, when a system of Cartesian coordinates with the point D at the origin and the point $P_A$ on the x-axis is used, is **characterized in that** the orthogonal intersects the line $DP_A$ at the centre point of one of the arcs and intersects the line $DP_I$ at the centre point of the other arc, and **in that** the line FP is at a distance from the point of rotation corresponding to half the centreline distance and has a slope in radian measure of -1/tan(π/(2·Z)).

**7.** Multi-shaft screw machine with paired co-directionally rotating screw shafts, the screw elements, which are paired opposite each other on the paired adjacent screw shafts, being paired fully wiping and having two or more screw flights, **characterized in that** the screw profiles can be represented in the entire cross section in each case by a continuously differentiable profile curve.

**8.** Use of screw elements according to one of Claims 1 to 6 in a multi-shaft screw machine.

**9.** Use according to Claim 8, **characterized in that** the profiles of the screw elements are displaced in pairs in relation to the point of rotation situated centrally in the barrel bore.

**10.** Method for producing screw elements for multi-shaft screw machines with paired co-directionally rotating screw shafts, the screw elements, which are paired opposite each other on the paired adjacent screw shafts, being paired fully wiping and having two or more screw flights, **characterized in that** arcs are put together to form a continuously differentiable curve to form the screw profiles.

**11.** Method according to Claim 10, **characterized in that** the screw profile is made up in the entire cross section of four or more arcs, the arcs merging tangentially with one another at their starting points and end points.

**12.** Computer program product for implementing the method according to Claim 10 or 11.

**Revendications**

**1.** Eléments hélicoïdaux comprenant deux ou plus de deux pas hélicoïdaux pour des arbres hélicoïdaux tournant par paire dans le même sens pour des machines à vis sans fin à plusieurs arbres, les éléments hélicoïdaux, qui sont opposés par paire sur les arbres hélicoïdaux adjacents par paire, raclant exactement par paire, **caractérisés en ce que** la totalité des sections transversales des profils hélicoïdaux peuvent être représentées par une courbe profilée différentiable de manière constante.

2. Eléments hélicoidaux selon la revendication 1, **caractérisés en ce que** la totalité de la section transversale du profil hélicoïdal est constituée de l'assemblage de quatre arcs de cercle ou plus, les arcs de cercle se prolongeant l'un dans l'autre en leur point initial et leur point final.

3. Eléments hélicoïdaux selon une des revendications 1 ou 2, **caractérisés en ce qu'**ils présentent une symétrie centrale et **en ce qu'**une section de 360°/(2.Z) de la courbe profilée est constituée d'un assemblage d'au moins deux arcs de cercle, Z étant le pas des éléments hélicoïdaux.

4. Eléments hélicoïdaux selon une des revendications 1 ou 2, **caractérisés en ce qu'**ils présentent une symétrie axiale et **en ce qu'**une section de 360°/(2.2) de la courbe profilée est constituée de l'assemblage d'au moins deux arcs de cercle, Z étant le pas des éléments hélicoïdaux.

5. Eléments hélicoïdaux selon la revendication 4, **caractérisés en ce qu'**une section de la courbe profilée est constituée de l'assemblage de deux arcs de cercle, les arcs de cercle se prolongeant l'un dans l'autre de manière différentiable constamment en un point $P_{FP}$, le point $P_{FP}$ étant situé sur une droite FP dont la perpendiculaire au point $P_{FP}$ passe par les points centraux des deux arcs de cercle.

6. Eléments hélicoïdaux selon la revendication 5, présentant un centre de rotation D, un point $P_A$ situé sur un cercle qui entoure le centre à un rayon extérieur ra de l'élément hélicoïdal, un point $P_I$ situé sur un cercle qui entoure le centre de rotation au rayon intérieur ri de l'élément hélicoïdal, une droite $DP_A$ qui passe par les points $P_A$ et D et une droite $DP_I$ qui passe par les points $P_I$ et D de telle sorte que lorsque l'on utilise un système de coordonnées cartésiennes dont le point D est à l'origine et le point $P_A$ sur l'axe x, ils sont **caractérisés en ce que** la perpendiculaire coupe la droite $DP_A$ au centre de l'un des arcs de cercle et la droite $DP_I$ coupe le centre de l'autre arc de cercle et **en ce que** la droite FP présente par rapport au centre de rotation une distance qui correspond à la moitié de la distance entre les axes a et une pente dont l'angle vaut $-1/\tan(\pi/(2\cdot Z))$.

7. Machine à vis sans fin à plusieurs arbres avec des arbres hélicoïdaux tournant par paire dans le même sens, les éléments hélicoïdaux, qui sont opposés par paire sur les arbres hélicoïdaux adjacents par paire, raclant exactement par paire et présentant deux ou plus de deux pas hélicoïdaux, **caractérisée en ce que** la totalité des sections transversales des profils hélicoïdaux peuvent être représentées par une courbe profilée différentiable de manière constante.

8. Utilisation d'éléments hélicoïdaux selon l'une des revendications 1 à 6 dans une machine à vis sans fin à plusieurs arbres.

9. Utilisation selon la revendication 8, **caractérisée en ce que** les profils des éléments hélicoïdaux sont décalés deux à deux par rapport au centre de rotation situé au milieu de l'alésage du boîtier.

10. Procédé de formation d'éléments hélicoïdaux pour machines à vis sans fin à plusieurs arbres avec des arbres hélicoïdaux tournant par paire dans le même sens, les éléments hélicoïdaux, qui sont opposés par paire sur les arbres hélicoïdaux adjacents par paire, raclant exactement par paire et présentant deux ou plus de deux pas hélicoïdaux, **caractérisé en ce que** pour réaliser les profils hélicoïdaux, des arcs de cercle sont assemblés pour former une courbe différentiable de manière constante.

11. Procédé selon la revendication 10, **caractérisé en ce que** la totalité de la section transversale du profil hélicoïdal est constituée de l'assemblage des quatre arcs de cercle ou plus, les arcs de cercle se prolongeant l'un dans l'autre tangentiellement en leur point initial et leur point final.

12. Produit de programme informatique pour la mise en oeuvre du procédé selon la revendication 10 ou 11.

**Fig. 1**

1) R = 0.3069  Mx = 0.2731
   α = 0.7854  My = 0.0000

1') R = 0.6931  Mx = 0.0000
   α = 0.7854  My = -0.2731

RA = 0.5800

**Fig. 2a**

**Fig. 2b**

**Fig. 2c**

RG   = 0.6300
RV   = 0.5800
RA   = 0.5800
RF   = 0.5800
S    = 0.0000
D    = 0.0000
T    = 2.0000

VPR = 0.0659
VPW= 0.7854
VLR = 0.0000
VLW= 0.0000
VRR = 0.0000
VRW= 0.0000

Fig. 3

Fig. 4a

Fig. 4b

Fig. 4c

RG = 0.5800
RV = 0.5800
RA = 0.5800
RF = 0.5500
S = 0.0600
D = 0.0300
T = 2.0000

VPR = 0.0000
VPW = 0.0000
VLR = 0.0000
VLW = 0.0000
VRR = 0.0000
VRW = 0.0000

**Fig. 4d**

Fig. 5a

Fig. 5b

Fig. 5c

```
RG  = 0.5800
RV  = 0.5800
RA  = 0.5800
RF  = 0.5500
S   = 0.0600
D   = 0.0300
T   = 2.0000
```

```
VPR = 0.0000
VPW = 0.0000
VLR = 0.0200
VLW = 1.5708
VRR = 0.0200
VRW = 1.5708
```

Fig. 5d

Fig. 6a

Fig. 6b

Fig. 7

1) R = 0.2199  Mx = 0.3234
α = 0.5236  My = 0.0000

1') R = 0.7801  Mx = -0.1617
α = 0.5236  My = -0.2801

RA = 0.5433

Fig. 8

RG = 0.6300
RV = 0.5433
RA = 0.5433
RF = 0.5433
S = 0.0000
D = 0.0000
T = 2.0000

VPR = 0.0867
VPW= 0.0000
VLR = 0.0000
VLW= 0.0000
VRR = 0.0000
VRW= 0.0000

**Fig. 9a**

RG = 0.6300
RV = 0.5433
RA = 0.5433
RF = 0.5433
S = 0.0000
D = 0.0000
T = 2.0000

VPR = 0.0910
VPW= 0.3491
VLR = 0.0000
VLW= 0.0000
VRR = 0.0000
VRW= 0.0000

**Fig. 9b**

RG = 0.6300
RV = 0.5433
RA = 0.5433
RF = 0.5433
S = 0.0000
D = 0.0000
T = 2.0000

VPR = 0.1057
VPW= 0.6981
VLR = 0.0000
VLW= 0.0000
VRR = 0.0000
VRW= 0.0000

**Fig. 9c**

RG = 0.6300
RV = 0.5433
RA = 0.5433
RF = 0.5433
S = 0.0000
D = 0.0000
T = 2.0000

VPR = 0.1378
VPW= 1.0472
VLR = 0.0000
VLW= 0.0000
VRR = 0.0000
VRW= 0.0000

Fig. 9d

**Fig. 10a**

**Fig. 10b**

1) R = 0.2371  Mx = 0.2845
   α = 0.3927  My = 0.0000

1') R = 0.7629  Mx = -0.2012
    α = 0.3927  My = -0.2012

RA = 0.5217

Fig. 11

Fig. 12a

Fig. 12b

RA = 0.5833

Fig. 13a

1) R = 0.0625  Mx = 0.5208
   α = 0.1745  My = 0.0000

2) R = 0.9375  Mx = -0.3409
   α = 0.2803  My = -0.1519

3) R = 0.0625  Mx = 0.4452
   α = 0.5822  My = 0.2325

4) R = 0.9375  Mx = 0.0000
   α = 0.5337  My = -0.5208

5) R = 0.9375  Mx = 0.0000
   α = 0.1745  My = -0.5208

6) R = 0.0625  Mx = -0.1519
   α = 0.2803  My = 0.3409

7) R = 0.9375  Mx = 0.2325
   α = 0.5822  My = -0.4452

8) R = 0.0625  Mx = -0.5208
   α = 0.5337  My = -0.0000

9) R = 0.0625  Mx = -0.5208
   α = 0.1745  My = -0.0000

10) R = 0.9375  Mx = 0.3409
    α = 0.2803  My = 0.1519

1') R = 0.9375  Mx = 1.5208
    α = 0.1745  My = -0.0000

2') R = 0.0625  Mx = 0.6591
    α = 0.2803  My = -0.1519

3') R = 0.9375  Mx = 1.4452
    α = 0.5822  My = 0.2325

4') R = 0.0625  Mx = 1.0000
    α = 0.5337  My = -0.5208

5') R = 0.0625  Mx = 1.0000
    α = 0.1745  My = -0.5208

6') R = 0.9375  Mx = 0.8481
    α = 0.2803  My = 0.3409

7') R = 0.0625  Mx = 1.2325
    α = 0.5822  My = -0.4452

8') R = 0.9375  Mx = 0.4792
    α = 0.5337  My = -0.0000

9') R = 0.9375  Mx = 0.4792
    α = 0.1745  My = -0.0000

10')R = 0.0625  Mx = 1.3409
    α = 0.2803  My = 0.1519

11) R = 0.0625  Mx = -0.4452
    α = 0.5822  My = -0.2325

12) R = 0.9375  Mx = -0.0000
    α = 0.5337  My = 0.5208

13) R = 0.9375  Mx = -0.0000
    α = 0.1745  My = 0.5208

14) R = 0.0625  Mx = 0.1519
    α = 0.2803  My = -0.3409

15) R = 0.9375  Mx = -0.2325
    α = 0.5822  My = 0.4451

16) R = 0.0625  Mx = 0.5208
    α = 0.5337  My = -0.0000

11') R = 0.9375  Mx = 0.5548
     α = 0.5822  My = -0.2325

12') R = 0.0625  Mx = 1.0000
     α = 0.5337  My = 0.5208

13') R = 0.0625  Mx = 1.0000
     α = 0.1745  My = 0.5208

14') R = 0.9375  Mx = 1.1519
     α = 0.2803  My = -0.3409

15') R = 0.0625  Mx = 0.7675
     α = 0.5822  My = 0.4451

16') R = 0.9375  Mx = 1.5208
     α = 0.5337  My = -0.0000

Fig. 13b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0160124 A2

**In der Beschreibung aufgeführte Nicht-Patentliteratur**

- Klemens Kohlgrüber: Der gleichläufige Doppelschneckenextruder. Hanser Verlag, 2007, 96 ff

- **CHANG DAE HAN.** Multiphase Flow in Polymer Processing. Academic Press, 1981